Europäisches Patentamt

European Patent Office

Office européen des brevets

(11) Veröffentlichungsnummer: **0 082 237**

**A1**

(12) # EUROPÄISCHE PATENTANMELDUNG

(21) Anmeldenummer: 81890208.2

(22) Anmeldetag: 23.12.81

(51) Int. Cl.³: **B 29 H 19/02**

(43) Veröffentlichungstag der Anmeldung:
29.06.83 Patentblatt 83/26

(84) Benannte Vertragsstaaten:
BE CH DE FR GB IT LI LU NL SE

(71) Anmelder: Mitterbauer, Franz
Schiffnerstrasse 10
A-4810 Gmunden(AT)

(72) Erfinder: Mitterbauer, Franz
Schiffnerstrasse 10
A-4810 Gmunden(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) **Vorrichtung zum Zerteilen von Fahrzeugreifen, insbesondere von Lastfahrzeugen.**

(57) Eine Vorrichtung zum Zerteilen von Fahrzeugreifen besteht aus zwei gegeneinander und gegen einen eingelegten Reifen drückbaren Teilen (1, 2) eines Schneidwerkzeuges, das eine sternförmige Messeranordnung aufweist.

Um den Schnittvorgang zu verbessern, sind zumindest an einem der beiden Werkzeugteile (1, 2) im Sektorbereich zwischen den Messern (6) axial vorstehende oder axial ausfahrbare Druckstücke vorgesehen, wobei im jeweils anderen Werkzeugteil entsprechende Ausnehmungen (8) für die Druckstücke (7) vorhanden sind.

FIG.1

EP 0 082 237 A1

<u>Vorrichtung zum Zerteilen von Fahrzeugreifen,</u>
<u>insbesondere von Lastfahrzeugen</u>

Die Erfindung bezieht sich auf eine Vorrichtung zum Zerteilen von Fahrzeugreifen, insbesondere von Lastfahrzeugreifen, bestehend aus zwei zwischen sich eine einen Reifen koaxial aufnehmende Abstützung bildenden und in Richtung der Achse der Reifenabstützung gegeneinander drückbaren Teilen eines Schneidwerkzeuges, das eine zur Achse der Reifenabstützung sternförmige Messeranordnung aufweist.

Zum Zerteilen von Fahrzeugreifen werden im allgemeinen Zahn- bzw. Messerwalzen eingesetzt, die ein Zerreißen der Reifen bewirken. Abgesehen davon, daß die Stückgröße bei diesem Zerreißvorgang sehr unterschiedlich und von der Armierung des jeweils von der Zahn- bzw. Messerwalze erfaßten Reifenteiles abhängig ist, können mit Hilfe solcher Zahn- und Messerwalzen nur Reifen bis zu einer bestimmten Größe wirtschaftlich zerkleinert werden, weil bei größeren Reifen, wie sie beispielsweise bei Lastfahrzeugen oder Erdbaumaschinen verwendet werden, der stählerne Wulstkern zu stark ist und eine erhebliche Festigkeit aufweist.

Um eine gleichmäßige Zerstückelung von Fahrzeugreifen sicherzustellen, was unter anderem auch für die Lagerung der zerteilten Reifen von Bedeutung ist, wurde bereits vorgeschlagen, die zu zerteilenden Reifen nicht zu zerreißen, sondern zu zerschneiden, und zwar mit Hilfe eines Schneidwerkzeuges, das eine sternförmige Messeranordnung aufweist und gegen ein den Reifen koaxial aufnehmendes Gegenwerkzeug gedrückt werden kann, so daß der Reifen sektorförmig zerteilt wird. Diese Zerteilung bringt jedoch hinsichtlich des Schneidvorganges Schwierigkeiten mit sich, weil die einzelnen Reifenteile nicht flach auf einer Abstützung aufliegen und daher der Reifen beim Schneiden erst zusammengedrückt werden muß, wobei die Reifenarmierung einen wesentlichen Widerstand darstellt, der insbesondere eine Längung der Gummiteile während des Zusammendrückens des Reifens verhindert. Größere Fahrzeugreifen können daher auch mit einer solchen Schneidvorrichtung wirtschaftlich nicht zerkleinert werden.

Der Erfindung liegt demnach die Aufgabe zugrunde, eine Vorrichtung zum Zerteilen von Fahrzeugreifen zu schaffen, die auf Grund einer genauen Schnittführung ein wirtschaftliches Zerschneiden von Fahrzeugreifen auch mit starker Armierung gewährleistet.

Ausgehend von einer Vorrichtung der eingangs geschilderten Art löst die Erfindung die gestellte Aufgabe dadurch, daß zumindest an einem der beiden Werkzeugteile im Sektorbereich zwischen den Messern axial vorstehende oder axial ausfahrbare Druckstücke vorgesehen sind und daß die Reifenabstützung im Bereich des jeweils anderen Werkzeugteiles entsprechende Ausnehmungen für die Druckstücke aufweist.

Durch das Vorsehen von Druckstücken, die in gegenüberliegende Ausnehmungen der Reifenabstützung beim Schnitthub des Schneidwerkzeuges eingreifen, kann der Reifen zumindest bereichsweise gespannt werden, weil ja die Druckstücke den Reifen in die Ausnehmungen hineindrücken. Die damit verbundenen Zugspannungen in Umfangsrichtung des Reifens verbessern die Schnittverhältnisse wesentlich, so daß auch Reifen mit starker Armierung

- 3 -

0082237

einwandfrei zerschnitten werden können.. Die Druckstücke
zwischen den Messern bewirken selbstverständlich auch
ein Zusammendrücken der Reifenteile, so daß gesonderte
Niederhalter für diesen Zweck entfallen können, obwohl
solche Niederhalter zusätzlich möglich sind. Erfordert
das Zusammendrücken der Wandteile eines Reifens bei einer
gleichzeitigen Einfaltung oder Ausstülpung der Lauffläche einen zu großen Kraftaufwand, so können vorteilhaft solche Reifen in Umfangsrichtung geteilt werden,
bevor die Teile jeweils für sich mit Hilfe der erfindungsgemäßen Vorrichtung zerschnitten werden. Um Teile eines
Reifens schnittgerecht spannen zu können, muß beispielsweise der Lauffflächenteil mit den daranhängenden Wandteilen in eine Schnittebene gestreckt werden. Dies wird
durch die Druckstücke in besonders einfacher Weise erreicht, weil mit Hilfe dieser Druckstücke der Übergangsbereich zwischen dem Wandteil und dem Lauffflächenteil
wellenlinienförmig gespannt werden kann, so daß die
sonst beim Flachdrücken eines solchen Reifenteiles auftretenden Wellen aufgenommen werden können und die gewünschte Streckung im Schnittbereich sichergestellt ist.

Bei dem Anstellen der Druckstücke an den zu zerteilenden Reifen muß wirksam verhindert werden, daß die angestrebte Spannung des Reifens durch eine Durchmesserverringerung abgefangen wird, weil in einem solchen Fall die
beim Anstellen der Druckstücke im Bereich der Ausnehmungen
durchgeführte Längung des Reifens nicht gegenüber einer
Umfangsarmierung, sondern mit dieser durch einer Wellung
des gesamten Reifens erfolgt. Es können folglich auch die
angestrebten Zugspannungen im Schnittbereich nicht wirksam werden. Damit nun ein solches Nachgeben des Reifens
bzw. eines Reifenteiles einfach verhindert werden kann, kann in weiterer Ausbildung der Erfindung die Reifenabstützung kegel- oder pyramidenförmig ausgebildet werden.
Diese Kegel- oder Pyramidenform bedingt beim Niederdrücken eines Reifens dessen Aufweitung, die einer Durchmesserverkleinerung durch die Belastung von den Druckstücken entgegenwirkt. Der gleiche Effekt kann auch erreicht werden, wenn die Schneidkanten der Messer auf
einem Kegelmantel liegen, was insbesondere dann von Vorteil ist, wenn die Messer selbst eine Reifenabstützung
bilden. Bilden die Messer eine Reifenabstützung, so wird
in besonders einfacher Weise gewährleistet, daß der
Reifen im Schnittbereich tatsächlich gespannt ist.

Damit während des Schnitthubes nur die für die
schnittgerechte Spannung des Reifens erforderliche Kraft
über die Druckstücke auf die Reifen ausgeübt wird,
können die Druckstücke schließlich über Druckfedern
an den Schneidwerkzeugteilen abgestützt werden. Die
Schnittkraft wird dabei nicht durch eine Überdehnung
des Reifens belastet.

In der Zeichnung ist der Erfindungsgegenstand beispielsweise dargestellt. Es zeigen

Fig. 1 eine erfindungsgemäße Vorrichtung zum Zerteilen
von Fahrzeugreifen in einer Seitenansicht,

Fig. 2 den unteren Teil des zweiteiligen Schneidwerkzeuges in Draufsicht,

Fig. 3 eine Untersicht des oberen Werkzeugteiles,

Fig. 4 den von einer erfindungsgemäßen Vorrichtung
schnittgerecht gespannten Teil eines Reifens
im Schnitt in einer Abwicklung,

Fig. 5 eine der Fig. 4 entsprechende Darstellung einer
Ausführungsvariante und die

Fig. 6 bis 8 verschiedene Möglichkeiten, einen Reifen
in Umfangsrichtung vorzuteilen, um nicht den vollen
Reifen in eine erfindungsgemäße Vorrichtung einspannen zu müssen.

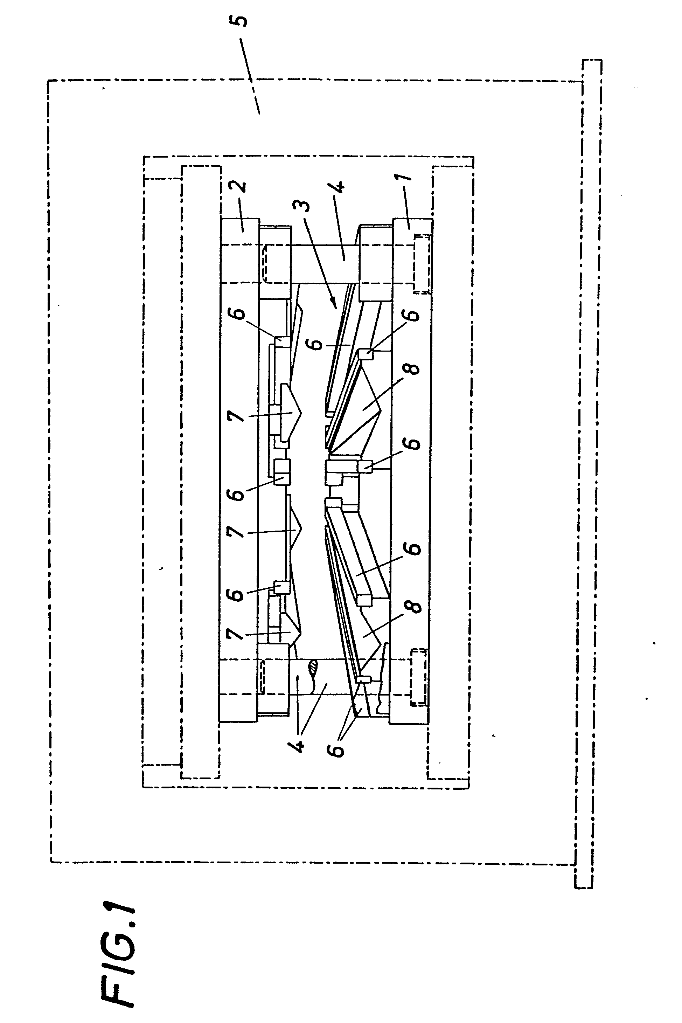

Wie aus Fig. 1 hervorgeht, besteht die dargestellte Vorrichtung im wesentlichen aus zwei Teilen 1 und 2 eines zweiteiligen Schneidwerkzeuges, das zwischen seinen beiden Teilen 1 und 2 eine Abstützung 3 aufweist, die die zu zerteilenden Reifen oder Reifenteile koaxial aufnimmt. Der obere Werkzeugteil 2 ist auf im unteren Werkzeugteil 1 gehaltenen Säulen 4 in Richtung der Achse der Abstützung 3 verschiebbar gelagert und kann mit Hilfe einer strichpunktiert angedeuteten Hydraulikpresse 5, in die das Schneidwerkzeug eingesetzt ist, gegen das untere Werkzeug 1 gedrückt werden. Da die zusammenwirkenden Messer 6 bezüglich der Achse der Abstützung sternförmig angeordnet sind, werden die koaxial auf die Abstützung 3 aufgebrachten Reifen oder Reifenteile sektorförmig in gleich große Stücke geschnitten. Damit dabei das Werkstück schnittgerecht gespannt werden kann, sind im oberen Werkzeugteil 2 axial vorragende Druckstücke 7 vorgesehen, die beim Schnitthub das zu zerteilende Werkstück in entsprechende Ausnehmungen 8 in der Reifenabstützung 3 hineindrücken, so daß das Werkstück in Umfangsrichtung unter eine Zugspannung gesetzt wird, die quer zur Schnittrichtung verläuft und folglich günstige Schnittbedingungen schafft. Die Druckstücke 7 und die zugehörigen, gegenüberliegenden Ausnehmungen 8 in der Reifenabstützung liegen im Sektorbereich zwischen den Messern 6, so daß der Schnittvorgang nicht behindert und trotzdem das Werkstück im Schnittbereich gespannt wird.

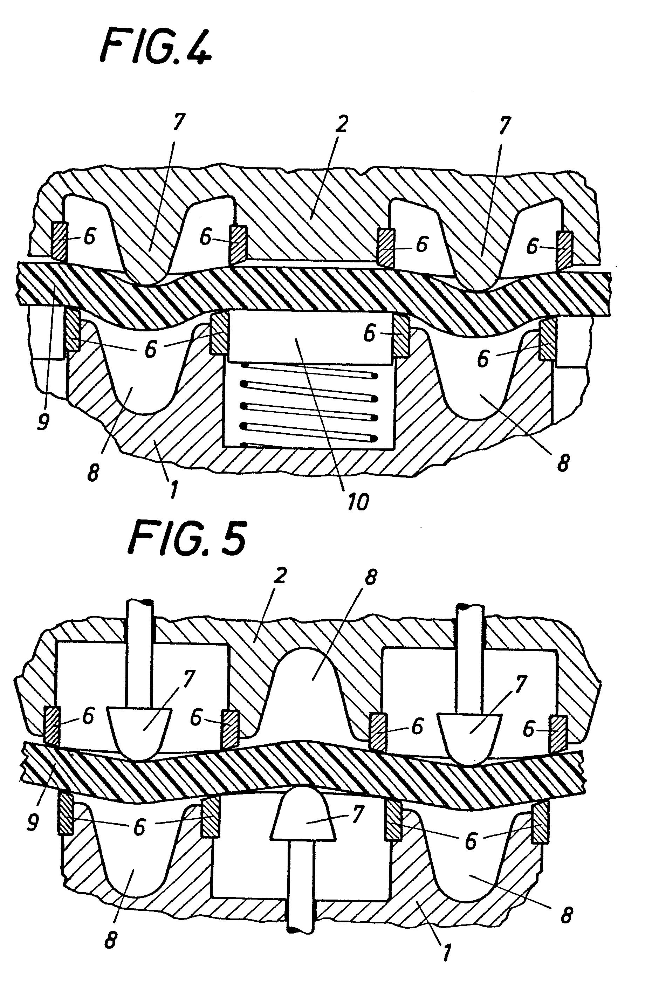

Wie der Fig. 4 entnommen werden kann, können die Druckstücke 7 fest am oberen Werkzeugteil 2 angeordnet und mit diesem Werkzeugteil 2 gegen den unteren Werkzeugteil 1 gedrückt werden. Der zwischen den beiden Werkzeugteilen 1 und 2 eingebrachte, gegebenenfalls in Umfangsrichtung vorgeteilte Reifen 9, der einen in sich geschlossenen Ring bildet, wird in die Ausnehmungen 8 der Reifenabstützung eingedrückt, die durch die Messer 6 des Werkzeugunterteiles 1 gebildet wird. Der Reifen 9 wird daher über diese Messer 6 gespannt, was günstige Schnittverhältnisse sicherstellt, wobei sich die im Reifen 9 ergebenden Zugspannungen während des Schnittes durch das Mitbewegen der Druckstücke 7 mit den Messern 6 des oberen Werkzeugteiles erhöhen. Ein mittels einer Feder druckbeaufschlagter Gegenhalter 10 kann, muß aber nicht vorgesehen sein. Die an Hand einer Abwicklung in Fig. 4 dargestellten Druckbeaufschlagungen des Reifens 9 lassen unmittelbar erkennen, daß der Reifen 9 nicht über die gesamte radiale Erstreckung einer gleichmäßigen Längung im Bereich der Ausnehmungen 8 unterworfen werden muß. Die Druckstücke 7 brauchen ja nicht über die radiale Reifenbreite erstreckt zu werden. Die mit den Druckstücken 7 ermöglichte bereichsweise Längung läßt in vorteilhafter Weise eine Anpassung der Reifenaufspannung an die Reifenarmierung zu, die insbesondere im Wulstbereich einer Umfangslängung des Reifens im Wege steht. Trotz der Armierung kann daher ein schnittgerechtes Spannen des Reifens auf der Abstützung gewährleistet werden.

Sind die Druckstücke 7 über Druckfedern am oberen Werkzeugteil 2 abgestützt, so begrenzt die Druckkraft die aufbringbare Zugbelastung, was wiederum zu einer günstigeren Preßkraft für den oberen Werkzeugteil führen kann. Allerdings müssen die Abstützfedern für die Druckstücke ausreichend stark bemessen sein, um die gewünschten Zugspannungen im Reifen sicherstellen zu können.

Wie in Fig. 5 angedeutet ist, können die Druckstücke 7 auch gegenüber den Werkzeugteilen 1 und 2 verschiebbar geführt und für sich anstellbar sein. Damit ist eine vom Schnitthub unabhängige Vorspannung des Reifens einstellbar, wobei die abwechselnd gegensinnig wirkenden Druckstücke 7 eine entsprechende Wellung des Reifenbereiches erzwingen, auf den sie einwirken. Diese Reifenwellung kann dazu ausgenützt werden, in den vorgesehenen Schnittbereichen einen gestreckten, im wesentlichen geraden Verlauf der Reifenwandteile zu erhalten. Die Anstellung der Messer bewirkt dann eine zusätzliche Spannkraft, weil die Messer vor dem eigentlichen Schnitt eine zusätzliche Reifenabstützung ergeben, die ein weiteres Ausbiegen des Reifens bedingt.

Um zu verhindern, daß beim Einwirken der Druckstücke 7 auf den zu zerteilenden Reifen 9 der Reifen unter einer Abnahme seines Durchmessers in die Ausnehmungen 8 eingezogen wird, sind die die Abstützung 3 für den Reifen bildenden Messer 6 des unteren Werkzeugteiles 1 nach einem Kegelmantel angeordnet, der ein Aufspreizen des aufgelegten Ringes beim Aneinanderdrücken der beiden Werkzeugteile 1 und 2 mit sich bringt. In Fig. 1 ist eine solche geneigte Anordnung der Messer 6 des unteren Werkzeugteiles 1 angedeutet.

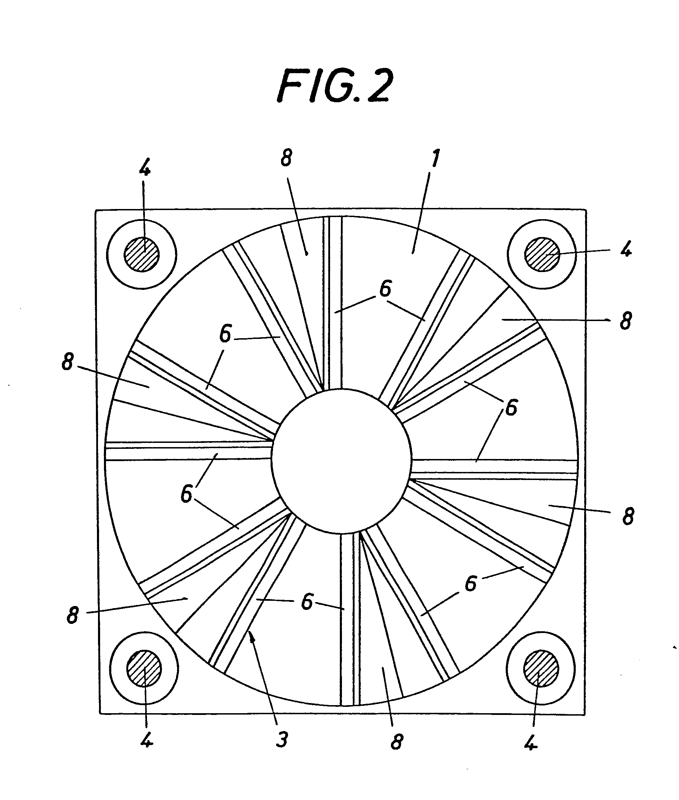

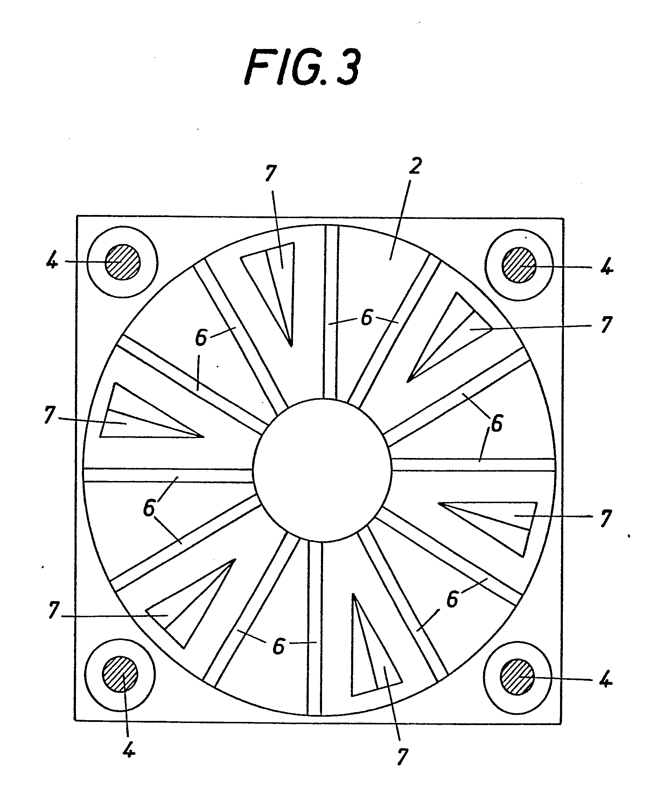

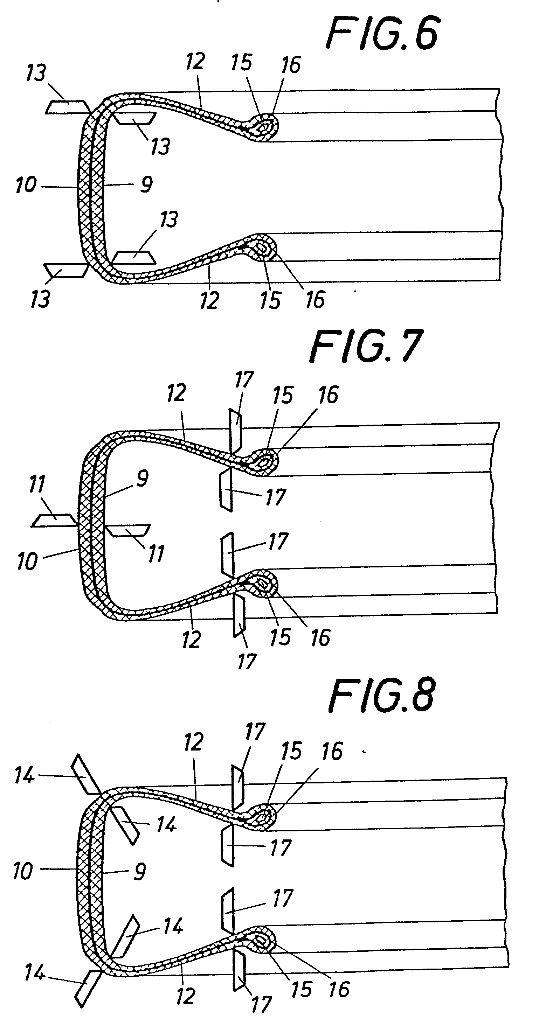

Das störungsfreie Schneiden eines Fahrzeugreifens setzt ein Zusammendrücken des Reifens in axialer Richtung voraus, wobei insbesondere für größere Reifendimensionen erhebliche Kräfte notwendig werden. Es erweist sich daher in manchen Fällen als einfacher, die Reifen vorzuteilen, so daß nur ringförmige Reifenteile schnittgerecht gespannt werden müssen. In den Fig. 6 bis 8 sind mögliche Schnittführungen in Umfangsrichtung der Reifen 9 angedeutet. Im einfachsten Fall kann der Reifen entlang der Mitte der Lauffläche 10 zerteilt werden, und zwar mit Hilfe von Kreismessern 11, wie dies in Fig. 7 angedeutet ist. Die Seitenwände 12 der Reifen 9 bilden in diesem Fall mit einem Teil der Lauffläche 10 das zu spannende Werkstück. Eine andere Möglichkeit der Vorteilung besteht darin, den Reifen 9 in seine Lauffläche und seine beiden Seitenwände zu zerlegen, was in den Fig. 6 und 8 angedeutet ist. Die hiefür verwendeten Kreismesser 13 nach der Fig. 6 liegen parallel zum zu zerschneidenden Reifen 9, während die Kreismesser 14 gemäß Fig. 8 etwa senkrecht zur Reifenwand im Schnittbereich stehen. Sind die Armierungen 15 der Wülste 16 besonders stark dimensioniert, so können die Wülste zusätzlich mit Hilfe von Kreismessern 17 entfernt werden, wie dies in den Fig. 7 und 8 angedeutet ist. Werden die Reifen 9 vor dem Einbringen in die Schneidvorrichtung nach den Fig. 1 bis 3 gemäß den Fig. 6 bis 8 zerteilt, so ergibt sich für das Spannen der erhaltenen Reifenteile zweifellos ein geringerer Kraftaufwand, wobei ein Einfalten oder Ausstülpen der Lauffläche vermieden wird, wie dies sonst notwendig wäre. Die Druckstücke 7 reichen daher auch aus, die Reifenteile im Schnittbereich unter Zugspannung flach zu halten. Gesonderte Niederhalter erübrigen sich.

Es braucht wohl nicht erwähnt zu werden, daß die Erfindung nicht auf das dargestellte Ausführungsbeispiel beschränkt ist. So könnte beispielsweise ein eigener Hydraulikantrieb für die Druckstücke vorgesehen werden. Eine gleichwertige Konstruktion ergibt sich auch, wenn nicht die Messer des unteren Werkzeugteiles, sondern die des oberen Werkzeugteiles geneigt angeordnet werden, wobei selbstverständlich auch die Druckstücke eine entsprechende Neigung erhalten müssen. Horizontale Messer im unteren Werkzeugteil können sogar Vorteile bezüglich der Beschickung mit den Reifen ergeben.

Patentansprüche :

1.     Vorrichtung zum Zerteilen von Fahrzeugreifen, insbesondere von Lastfahrzeugreifen, bestehend aus zwei zwischen sich eine einen Reifen koaxial aufnehmende Abstützung (3) bildenden und in Richtung der Achse der Reifenabstützung (3) gegeneinander drückbaren Teilen (1, 2) eines Schneidwerkzeuges, das eine zur Achse der Reifenabstützung (3) sternförmige Messeranordnung aufweist, dadurch gekennzeichnet, daß zumindest an einem der beiden Werkzeugteile (1, 2) im Sektorbereich zwischen den Messern (6) axial vorstehende oder axial ausfahrbare Druckstücke (7) vorgesehen sind und daß die Reifenabstützung (3) im Bereich des jeweils anderen Werkzeugteiles entsprechende Ausnehmungen (8) für die Druckstücke (7) aufweist.

2.     Vorrichtung nach Anspruch 1, dadurch gekennzeichnet, daß die Reifenabstützung (3) kegel- oder pyramidenförmig ausgebildet ist.

3.     Vorrichtung nach Anspruch 1 oder 2, dadurch gekennzeichnet, daß die Schneidkanten der Messer (6) auf einem Kegelmantel liegen.

4.     Vorrichtung nach einem der Ansprüche 1 bis 3, dadurch gekennzeichnet, daß die Messer (6) die Reifenabstützung (3) bilden.

5.     Vorrichtung nach einem der Ansprüche 1 bis 4, dadurch gekennzeichnet, daß die Druckstücke (7) gegenüber den sie tragenden Werkzeugteilen (1, 2) mit Hilfe von Druckfedern abgestützt sind.

FIG.1

# FIG.2

# FIG.3

FIG.4

FIG.5

0082237

## FIG.6

## FIG.7

## FIG.8

0082237

**Europäisches Patentamt**

**EUROPÄISCHER RECHERCHENBERICHT**

Nummer der Anmeldung

EP 81 89 0208

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 354 464 (I.ZIEGLER) *Seite 2, Absatz 2 - Seite 4, Absatz 4* | 1 | B 29 H 19/02 |
| Y | DE-A-2 416 833 (A.RIEDER) *Seite 1* | 5 | |
| A | DE-A-2 411 477 (A.RIEDER) | 3 | |
| A | FR-A-1 579 968 (LINDEMANN MASCHINENFABRIK) | | |
| A | DE-A-2 417 755 (A.RIEDER) | | |
| A | FR-A-2 158 312 (N.HEMMINGS) | | |
| A | DE-A-2 939 849 (G.SCHUBERT) | | |

**RECHERCHIERTE SACHGEBIETE (Int. Cl. ³)**

B 29 H 19

Der vorliegende Recherchenbericht wurde für alle Patentansprüche erstellt.

| Recherchenort | Abschlußdatum der Recherche | Prüfer |
|---|---|---|
| DEN HAAG | 08-09-1982 | SCHMITT L.P. |